# EUROPEAN PATENT APPLICATION

(11) **EP 4 685 466 A1**
(43) Date of publication of application: **28.01.2026**
(21) Application number: 24190942.3
(22) Date of filing: 25.07.2024
(51) Int. Cl.: G01N 21/65, G01J 3/44, G02B 21/00, G02B 21/16, G02B 21/32

(54) **APPARATUS FOR CHARACTERIZATION OF BIOLOGICAL OBJECTS AND METHOD OF CHARACTERIZING BIOLOGICAL OBJECTS**

(71) Applicant: Schütze, Karin, 82327 Tutzing (DE); Schütze, Raimund, 82327 Tutzing (DE)
(72) Inventor: Schütze, Karin, 82327 Tutzing (DE); Schütze, Raimund, 82327 Tutzing (DE)
(74) Representative: Schön, Christoph

(57) **Abstract**

The present invention discloses an apparatus (100) for analyzing a specimen of interest present in a sample, comprising: an observation unit (130) comprising a light source (131), an object carrier (132), a first laser system (110) emitting a laser beam having a first wavelength so as to separate the specimen of interest from surrounding components; a second laser system (120) emitting a second laser beam having a second wavelength so as to identify the specimen via Raman analysis; as well as a method of analyzing a specimen of interest in a sample by using such an apparatus (100).

The present invention further preferably comprises an image analysis system which is configured to identify the specimen of interest prior to laser microdissection and/or prior to Raman analyses in an automated manner by using machine learning and/or artificial intelligence (ML/AI). ML and AI supported Raman spectra analysis result in a data base feedback system for fast sample identification and determination.

## Description

### Prior art

Methods of analyzing samples of biological objects, for example, methods of analyzing cells, cell clones, bacteria or other biological objects, are currently used in many cases. Examples of applications in which it is desirable to analyze samples of biological objects with respect to their properties or behavior include a determination of reactions to active substances, drug resistance, a detection of pathological states such as sepsis, and a determination of compatibility of active substances and chemicals. For reasons of reproducibility and reliability, it can also be desirable to carry out measurements on a plurality of samples of biological objects and/or to repeatedly measure samples of the same biological object.

### Objective technical problem

There is a need for devices and methods for investigating samples of biological objects, such as tumor cells, for example tumor cells in a tissue sample. In this context, there is a particular need for devices and methods that allow investigation of samples of biological objects in a physiological environment such as a cell culture medium. Of particular interest is a system that is easy to handle and can be used by a technician on an every day basis, said system allowing an analysis of samples of biological objects in a native or vital state that can be maintained beyond the time period of testing. In particular, there is a need for devices and methods that are suitable for measurement of a plurality of samples of biological objects and/or repeated measurement of samples of the same biological object, wherein by means of quantitative measurement values, the properties or behavior of the biological objects can be determined in an objective manner. Furthermore, it would be desirable to have a system which further allows sorting of biological objects.

Raman-microscopy is a label-free, non-invasive yet highly sensitive technique, analyzing samples in an entire non-contact way solely by monitoring the interaction of focused laser light with the biomolecules of the cell. The resulting Raman data are depicted as spectral pattern that are unique for each cell kind and cell state. Raman spectra reflect biochemical changes of the cells during development and differentiation, caused by disease or in response to agents and drugs (see Non-Patent Literature 1).

In addition, once a sample of a biological object has been subjected to Raman analysis and a representative single cell or cell cluster has been identified, e.g., a tumor cell, a microbe etc. within said sample of the biological object, it can be desirable to isolate a specific single cell or cell cluster identified, which thereafter can be subjected to further investigation.

Accordingly, an apparatus for isolating an individual cell or cluster of cells is desirable, wherein said apparatus allows a selective isolation of the identified single cell or cell cluster without affecting the integrity of the single cell or cell cluster to be analyzed.

One specific method known in the art which could allow a selective and non-destructive isolation of single cells or cell clusters from a biological sample is laser-based microdissection.

Laser-based microdissection allows a selective contamination-free isolation of single cells and cell clusters e.g. by laser microdissection and pressure catapulting, wherein a UV-laser (for example a pulsed UV-laser) that is coupled with a motorized inverse observation unit, is used to cut the biological object e.g. a tissue sample in a desired manner so as to isolate the single cell or cell cluster of interest, whereupon a single laser pulse is applied which creates a microplasma to eject the isolated single cell or cell cluster of interest from the remaining tissue sample into a microfuge cap.

Alternative apparatuses/systems using the principles of laser-based microdissection include inter alia a system marketed by Fluidigm (AccuLift LCM) or Leica (LMD6/7). The respective differences between those systems using laser-based microdissection mainly are the way in which the isolated cells are transferred after microdissection for further processing, as it is well known to a person skilled in the art.

| | |
|---|---|
| Non-Patent Literature 1: | Hesham K. Yosef and Karin Schütze: Non-Destructive and Label-Free Monitoring of 3D Cell Constructs; Chapter 10; in: Basic Concepts on 3D Cell Culture Editors Kasper Cornelia Dominik Egger Antonina Lavrentieva. Ed. 1; June 2021; p. 233-250. |

### Summary of Invention

The present invention is based on the finding that Raman spectroscopy and laser-based microdissection can be used in combination for an analysis of samples of biological objects in a more efficient manner.

In particular a combination of these two analytical methods was found advantageous as the use of Raman spectroscopy for identification of a single cell or a cell cluster of interest from a biological object to be investigated provides the benefit that such an analysis can be done in a short period of time and further does not require an initial modification of the biological sample e.g. by staining and, therefore, allows processing of a native and unmodified cell or a cell cluster of interest.

In addition, reaction of isolated and catapulted samples towards reagents, drugs, poisons etc. could be observed immediately.

First approaches to combine Raman spectroscopy and laser-based microdissection using conventional systems revealed that an analysis of a biological sample by Raman analysis using a first apparatus known in the art in a first step and a subsequent transfer of the biological sample to a second apparatus for isolating the single cells or cell clusters identified in the first step by laser-based microdissection cannot be realized in an acceptable manner.

In more detail, a single cell or cluster of cells isolated in an apparatus performing Raman spectroscopy, could not be precisely identified in a second apparatus as an image matching required for isolation of the target cell/cell cluster for laser microdissection performed by the second apparatus could not be performed. Accordingly, a time-consuming manual adaptation of the image matching was required before a selective laser-based dissection of the single cell or cell cluster of interest could be carried out.

Furthermore, a transfer of the biological sample from the first apparatus to the second apparatus and a subsequent readjustment turned out to be a lengthy operation so that biological samples containing living cells which were alive only for a short period of time, could not be analyzed.

To overcome these drawbacks associated with the use of two separate apparatuses, the present inventors investigated an option to implement both laser systems for Raman analysis and for laser-based microdissection into one single apparatus.

However, a simple combination of the two systems did not allow a smooth processing of the individual systems due to an interference of the two individual laser systems.

### Solution according to the present invention

As a result of intensive research, the inventors found that a specific configuration of the two laser systems allowed an efficient and reliable processing of a biological object with both laser systems in a time efficient manner.

The present invention is directed to an apparatus for analyzing a specimen of interest present in a sample, comprising: an observation unit comprising a light source, an object carrier, and at least one device for visual observation;a first laser system emitting a laser beam having a first wavelength so as to separate the specimen of interest from surrounding components; a second laser system emitting a second laser beam having a second wavelength so as to identify the specimen via Raman analysis;wherein, the observation unit, the first laser system and the second laser system have the following configuration; the first and the second laser systems each comprising at least a beam generating device, and a beam guidance device comprising one or more lenses, at least one beam splitter and/or deflection mirror, which are configured to be adjusted in all three orthogonal coordinates (x, y, z) in such a manner that the beam of the first laser system and the beam of the second laser system, respectively, can be positioned and focused separately from each other, wherein said first laser beam and said second laser beam share a common three-dimensional beam pass direction at least in a section before hitting the sample, wherein at least one beam guiding device of each of the first laser system and the second laser system are also aligned in said common three-dimensional direction of the first laser beam and the second laser beam.

Such a configuration allows an implementation of a Raman analysis due to a sufficient collection of light scattered on the sample, which is crucial for an isolation and delimitation of the target area for further processing by microdissection with the second laser system.

Moreover, as no transfer of the biological sample from a first laser system to a second laser system is required, the processes for image matching are optional and not necessary. This improves the accuracy of the microdissection and reduces danger of contamination of the dissected single cell or cell cluster and minimizes a loss of selected specimen. Accordingly, the accuracy of further analysis steps based on the single cell or cell cluster of interest can be improved.

Furthermore, processing of the biological sample with both laser systems can be performed in a shorter period of time thereby allowing an analysis of living biological samples having a short lifespan.

In a preferred embodiment of the present invention the apparatus comprises a second laser beam/second laser system which is configured to additionally generate simultaneous optical trapping forces so as to hold a sample of interest in the laser focus, preferably during Raman analysis.

The unique combination of Raman with optical trapping features allows to catch individual cell or bacteria in solution and to arrest them within the laser focus during Raman spectral acquisition. In addition, optical trapping enhances the intensity of the Raman signal, providing optimized sensitivity for single cell or bacteria measurements in a few microliters of sample volume. The combination of Raman with optical trapping is exemplarily disclosed in M. Steinke et al.: Rapid Analysis of Cell-Nanoparticle Interactions using Single-Cell Raman Trapping Microscopy; Angew. Chem. Int. Ed. 2018, 57, 4946 -4950.

It was found that Raman analysis can also be used for further classification of a specific cell or cell cluster isolated by laser-based microdissection. A Raman spectrum from a cut-out single cell or cluster of cells obtained by microdissection can provide further insight into the molecular composition of the dissected cell or cell cluster. In addition, the Raman spectra obtained can be compared to other Raman spectra available in a database to further obtain valuable information about the specific cells. Therefore, optical trapping of a single cell or cell cluster of interest provides a possibility to hold the cut-out cell or cell cluster in a desired position to allow further processing by Raman spectroscopy without affecting the quality of the Raman spectrum obtained.

Additionally, microdissected cells that already have been transferred (usually catapulted) into a microfuge cap can also be analysed within the microfuge cap to gain further information, for example when transferred (usually catapulted) into a special buffer/liquid/drug, the reaction and/or molecular activity of the catapulted cell(s) may be determined.

In a preferred embodiment of the present invention the apparatus according to the present invention comprises the two laser systems having a configuration, wherein the wavelength of the first laser beam is in a range of between 250 and 450 nm and/or the wavelength of the second laser beam is in a range of between 450 nm and 1100 nm.

These specific wavelength ranges of the first and second laser systems were found to be most suitable for a combined use as defined above, while keeping an interference of the two laser systems at a low level.

According to the present invention it was found that two specific configurations of the two laser systems allow detection of a high number of Raman photons leading to high accuracy and quality of the Raman spectrum obtained while maintaining a smooth operation of the two laser systems.

In a preferred embodiment the apparatus according to the present invention has a configuration wherein a guidance device of the first laser system either is positioned (1) above the second laser system which comprises
a. a deflection mirror having a 20% or more reflection for the first laser and is configured to be moved into the beam path shared by the first and second laser beam; preferably the beam path shared by the first and second laser beam is also shared with the light path of the observation unit or
b. a beam splitter comprising on its surface a coating having at least 90% or more transmission for the second laser wavelength as well as for the emitted and back-reflected Raman photons and at least 20 % reflection for the first laser wavelength or a patterned coating comprising a small area of 1-10% wherein the first laser wavelength is reflected;
or is positioned (2)
below the second laser system wherein said second laser system comprising a beam splitter comprising a coating having at least 90% reflection of the second laser wavelength as well as for the emitted and back-reflected Raman photons and at least 20% transmission for the first laser.

In a further preferred embodiment of the apparatus according to the present invention, the guidance device of the first laser system is positioned as defined in (1) and wherein the deflection mirror is attached to a mirror holder which may be movably mounted on a high precision rail.

In a particularly preferred embodiment, the apparatus according to the present invention comprises a guidance device of the first laser system which is positioned as defined in (1) and wherein the deflection mirror is attached to a mirror holder which comprises a magnetic material configured to magnetically move and/or lock the deflection mirror in an end position in which the deflection mirror is positioned in the common three-dimensional direction of the first laser beam and the second laser beam.

Surprisingly, it was found according to the present invention that such a configuration allows a fast movement of the deflection mirror inside the beam path shared by the first and second laser beam, so that focusing of the first laser system on the cell or cell cluster of interest and a subsequent quick removal from the beam path shared by the first and second laser beam can be achieved. Due to the very short time in which the deflection mirror is positioned in the shared three-dimensional direction of the first laser beam and the second laser beam, the optical trapping forces which can be generated by the second laser system (Raman trapping) so as to hold a sample of interest, can be maintained for the cell or cell cluster of interest despite short interruption of the optical trapping forces. Accordingly, this preferred configuration allows use of a first laser system while applying the trapping forces of the second laser system so as to hold the cell or cell cluster of interest in the respective position. Remarkably, due to the shared beam pass of the first and second laser system the size of the apparatus could kept small and image matching for both laser systems is optimized.

In a particularly preferred embodiment the apparatus further comprises a collection device located above or below the object carrier to which a specimen of interest can be transported by use of the first laser system.

In a particularly preferred embodiment the apparatus further comprises a processing unit configured to defocus the beam focus of the first laser system before the specimen of interest is transported to the collection device and/or to refocus the beam focus to carry out cutting of the next specimen of interest.

In a particularly preferred embodiment of the present invention the first laser system is a pulsed UV laser and the second laser system is a continuous visible or NIR laser.

In a particularly preferred embodiment the collection device can be moved independently In all three orthogonal coordinates (x/y/z).

The apparatus according to any one of the preceding sections, further comprising an image analysis system which is configured to identify the specimen of interest prior to laser microdissection and/or prior to Raman analyses in an automated manner by using machine learning and/or artificial intelligence (ML/AI). Suitable image analyses systems and/or tissue cytometers are known in the art.

Furthermore, the present invention provides a method of analyzing a specimen of interest in a sample, the method comprising the following steps:
a. investigating a sample with respect to a specimen of interest by using an observation unit including a light source and preferably in addition to the observation unit a spectrometric detection component
b. optionally identifying the specimen of interest present in said solid or liquid sample by using Raman analysis by a second laser system having a wavelength of between 450 nm to 1100 nm;
c. isolating said specimen by circum-cutting it with a first laser system having a wavelength of between 250 nm to 450 nm;
d. transporting said specimen of interest to a collection device by using at least a single impulse of the first laser system having a wavelength of between 250 nm to 450 nm; and
e. optionally, analyzing said specimen of interest on said collection device using Raman analysis, preferably Raman trapping analysis, by the second laser system having a wavelength of between 450 nm to 1100 nm.

The method according to the present invention allows a time effective identification of an individual cell or cell cluster of interest in a biological sample, a precise isolation of said cell or cell cluster without contamination and a subsequent analysis of said individual cell or cell cluster isolated in the preceding steps. As an example, the reaction of an isolated living specimen in different buffer solutions may be observed by using the method according to the present invention. Moreover, various biological samples can be analyzed by said method without requiring substantial modifications of the measurements wherein the biological samples to be analyzed may be for example blood samples, blood smears, tissue samples, cell cultures, plant cells etc.

Furthermore, the method according to the present invention offers that the analysis of the individual cell or cell cluster of interest can be performed without carrying-out an initial preparation or modification of the naive biological object, which may impact the validity of subsequent analysis steps. Additionally, it is well known that the results obtained from an analytical method which requires an initial preparation and/or modification of the biological object such as fixation or staining may differ depending on the respective skills of the artisan who carries out such a method. Hence, by using the method according to the present invention the variability of the analytical results obtained can be greatly reduced.

In a preferred embodiment of the method of analyzing a specimen of interest according to the present invention the specimen of interest may be selected from the group consisting of microbes, tumor cells, dysplastic cells, stem cells, tissue, forensic samples or plant cells.

In addition, in a preferred embodiment of the method according to the present invention the specimen of interest in step e) may be exposed to one or more antibiotics so as to determine antibiotic susceptibility of said specimen and/or to one or more cytostatics so as to determine efficacy of the cytostatic drug for said specimen and/or any other reagent or poison affecting the specimen.

In a further preferred embodiment of the method according to the present invention, before step b) a step of subjecting the sample to a Raman analysis may be carried out.

In a further preferred embodiment of the method according to the present invention, before step c) a statistical evaluation and judgment on the basis of artificial intelligence and/or machine learning algorithms for complex matrix data evaluation may be carried out.

### Brief description of the Figures

Fig. 1 discloses a schematic apparatus according to the first embodiment.
Fig. 2 discloses a schematic apparatus according to the second embodiment.
Fig. 3 discloses a schematic apparatus according to the third embodiment.

### Detailed description

Although the present invention will be described with respect to particular embodiments below, the description is not to be construed in a limiting sense.

Before describing in detail exemplary embodiments of the present invention, definitions important for understanding the present invention are provided.

As used in this specification and in the appended claims, the singular forms of "a" and "an" also include the respective plurals unless the context clearly dictates otherwise.

In the context of the present invention, the terms "about" and "approximately" denote an interval of accuracy that a person skilled in the art will understand to still ensure the technical effect of the feature in question. The term typically indicates a deviation from the indicated numerical value of ±20 %, preferably ±15 %, more preferably ±10 %, and even more preferably ±5 %.

It is to be understood that the term "comprising" is not limiting. For the purposes of the present invention the term "consisting of" or "essentially consisting of" is considered to be a preferred embodiment of the term "comprising of". If hereinafter a group is defined to comprise at least a certain number of embodiments, this is meant to also encompass a group which preferably consists of these embodiments only.

Furthermore, the terms "(i)", "(ii)", "(iii)" or "(a)", "(b)", "(c)", "(d)", or "first", "second", "third" etc. and the like in the description or in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein. In case the terms relate to steps of a method or use, there is no time or time interval coherence between the steps, i.e., the steps may be carried out simultaneously or there may be time intervals of seconds, minutes, hours, days, weeks, etc. between such steps, unless otherwise indicated.

The term "to generate optical trapping forces so as to hold a cell or cell cluster" as used herein refers to a non-destructive holding of a biological sample in place. In this context, metabolic and/or cellular functions and/or interactions remain intact together with the environment of the cells or cell clusters produced. In a state being held by optical trapping forces, the biological cells or cell clusters are held in such a way that they are in a moist state that allows an exchange of molecules, substances and/or metabolites of the biological cells or cell clusters, for example living cells, with the environment.

It is to be understood that this invention is not limited to the particular methodology, protocols, reagents, etc. described herein as these may vary. It is also to be understood that the terminology used herein is for the purpose of describing particular embodiments only and is not intended to limit the scope of the present invention that will be limited only by the appended claims. Unless defined otherwise, all technical and scientific terms used herein have the same meaning as commonly understood by one of ordinary skill in the art.

The present invention provides an apparatus (100) for analyzing a specimen of interest present in a sample, comprising: an observation unit (130) comprising a light source (131), an object carrier (132), and at least one device for visual observation (133); a first laser system (110) emitting a laser beam having a first wavelength so as to separate the specimen of interest from surrounding components; a second laser system (120) emitting a second laser beam having a second wavelength so as to identify the specimen via Raman analysis; wherein, the observation unit (130), the first laser system (110) and the second laser system (120) have the following configuration; the first and the second laser systems (110, 120) each comprising at least a beam generating device (111,121), and a beam guidance device comprising one or more lenses (112, 122), a beam splitter and/or deflection mirror (115, 115a, 115b, 125, 125b), which are configured to be adjusted in all three orthogonal coordinates (x, y, z) in such a manner that the beam of the first laser system (110) and the beam of the second laser system (120), respectively, can be positioned and focused separately from each other, wherein said first laser beam and said second laser beam share a common three-dimensional beam pass direction at least in a section before hitting the sample, wherein at least one beam guiding device (115, 115a, 115b, 125, 125b) of each of the first laser system (110) and the second laser system (120) are also aligned in said common three-dimensional direction of the first laser beam and the second laser beam together with the optical path of the observation unit (130).

As far as coordinate directions are indicated in the drawings these refer to a situation with respect to the shared beam pass, such that the shared beam pass is substantially parallel to the z direction and the object carrier is substantially parallel to the x-y plane. Substantially parallel is to be understood as a maximum deviation of 10° or less, preferably 5° or less, more preferably 2.5°, most preferably 1° or less.

Associated with an observation unit (130) are a light source (131) for observation light, which preferably is visible light, as well as a device for visual observation (133), preferably a device comprising an appropriate protective filter, and combined observation and recording devices comprising, for example, a camera, a monitor and a video system. A variable IR filter is advantageously inserted ahead of the latter to perform a protective function.

Optionally, the observation unit (130) may include a fluorescence device comprising light sources for wavelength-specific illumination comprising the required filter sets.

The object carrier (132) can be displaceable in the directions of the x, y and z axes in a manner known per se, so as to achieve an appropriate positioning. The lens of the observation unit in turn can be displaceable at least in the z direction.

Accordingly, one way to produce movements in the x-y plane is to displace the object carrier (132) in the x-y direction, in which case the cells and/or cell clusters it contains move simultaneously in this plane.

Movements in the z direction can be produced in various ways; one way may be to move the object carrier (132) in the z direction relative to the lens of the observation unit; another way may be to move the lens of the observation unit in the z direction relative to the object carrier (132). In both cases focusing can be maintained with respect to the visible observation light.

In the illustrated embodiment the observation and recording devices (133) are arranged so as to operate with transmitted light. The arrangement can of course be such that the observation and recording devices (133), respectively, are positioned on one side of the observation unit (130) and the light source (131) for the observation light is located behind the observation unit (130), in the direction of the beam, so that it is possible to operate by using reflected light.

In the embodiment described above an arrangement may be employed in which all of the light beams generated by each individual light source (131) are passed, deflected and focused practically within the same plane when viewed from the light-generating devices. The various beams can be sent to the object carrier (132) via at least a specific first guidance device (115, 115a, 115b) of the first laser beam and a second guidance device (125, 125b) of the second laser beam and the lens. This arrangement enables a very compact assembly, which also guarantees a reliable functioning of the apparatus (100) according to the present invention.

Accordingly, the first laser beam (B1) of the first laser system (110) and the second laser beam (B2) of the second laser system (120) can be independently subdivided into a first section (B1A/B2A) in which the beam path of the first and the second laser beam do not share substantially the same direction in the x-y-z direction and a shared section (B1BB2B) in which the beam path of the first and second laser beam form a shared beam path in the x-y-z direction intersecting the lens of the observation unit (130), the object carrier (132) and the at least one guiding device (115, 115a, 115b, 125, 125b) of each of the first laser system (110) and the second laser system (120).

In other words, in this embodiment the axis formed by the shared beam pass of the first laser beam and the second laser beam intersects the object carrier (132), the lens of the observation unit (130) and at least one guiding device (115, 115a, 115b, 125, 125b) of each of the first laser system (110) and the second laser system (120).

The object carrier (132) according to the present invention is a device which carries at least one biological sample. The object carrier (132) may be any suitable carrier comprising a glass bottom, such as a glass slide, a cell culture dish, or a multiwell plate. Preferably, the material of the object carrier (132) may be borosilicate, quartz, or calcium fluoride. In preferred embodiments coating of the carrier may be necessary. Preferred coating materials may be polyethyleneimine (PEI), poly-L-ornithine or poly-L-lysine.

The biological sample which can be carried by the carrier may be selected from the group consisting of cells or tissue, such as a histological tissue section, frozen sections, fixed cells, living cells, cultured cells, plant cells, or germs/microbes such as bacteria, fungi, spores, and cell clones.

In a preferred embodiment the biological sample can be selected from the group consisting of microbes, tumor cells, dysplastic cells, stem cells, forensic samples or plant cells.

In a particular preferred embodiment the biological sample may be microbes.

In a particular preferred embodiment the biological sample may comprise tumor cells.

In a particular preferred embodiment the biological sample may comprise dysplastic cells.

In a particular preferred embodiment the biological sample may comprise stem cells.

In a particular preferred embodiment the biological sample may be forensic samples.

In a particular preferred embodiment the biological sample may comprise plant cells.

In a further preferred embodiment of the apparatus (100) of the present invention the apparatus (100) further comprises a collection device (140) located above or below the object carrier (132) to which a specimen of interest can be transported by use of the first laser system (110).

Accordingly, the cell or cell cluster of interest can be transported to a collection device (140) e.g. by a single laser pulse provided by the first laser system (110) thereby shortening the time of transport of the isolated cell or cell cluster of interest for a subsequent analysis. Non-contact laser induced transportation against gravity prevents contamination with cell debris of the desired sample. In another embodiment the isolated cell or cell cluster of interest can be transferred to the collection device (140) by gravitational forces.

Preferably, the apparatus (100) of the present invention comprises a processing unit configured to defocus the beam focus of the first laser system (110) before the specimen of interest is transported to the collection device (140) and/or to refocus the beam focus to carry out cutting of the next specimen of interest.

In a preferred embodiment of the apparatus (100) of the present invention the first laser system (110) may be a pulsed UV laser and the second laser system (120) may be a continuous visible or NIR laser.

In a further preferred embodiment of the apparatus (100) of the present invention the collection device (140) can be moved independently in all three orthogonal coordinates (x/y/z).

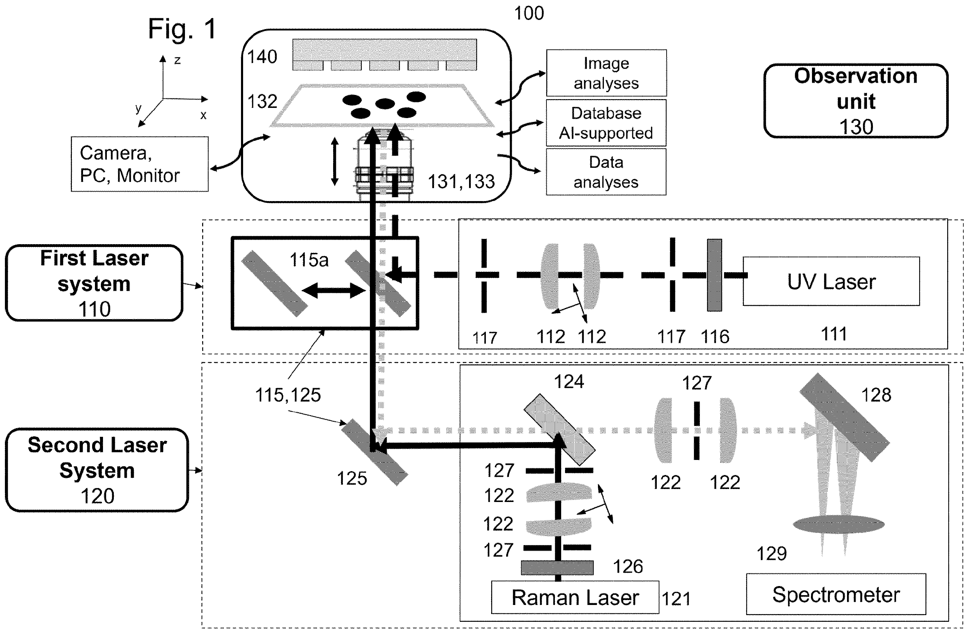

The at least one guiding device (115, 115a, 115b, 125, 125b) of each of the first laser system (110) and the second laser system (120) which are intersected by an axis formed by the shared beam pass of the first laser beam and the second laser beam will be described in detail in the following with reference to the configurations of the apparatus (100) comprising the two laser systems shown in FIGs. 1 to 3 below.

In a first preferred configuration of the apparatus (100) of the present invention as shown in FIG. 1 the guidance device (115, 115a, 115b) of the first laser system (110) is positioned above the guidance (125, 125b) device of the second laser system (120), wherein the guiding device (115, 115a, 115b) of the first laser beam is configured to guide the first laser beam along an individual beam path section (B 1A) towards the direction of the shared section of the first laser beam and the second laser beam (B1B), wherein the guidance device (115, 115a, 115b) of the first laser system (110) comprises a deflection mirror having a 20% or more reflection for the first laser beam and is configured to be moved into the beam path shared by the first and second laser beam (= x-y-z axis of the shared beam pass).

According to the present invention when a guidance device (115, 115a, 115b) of a first laser system (110) is defined to be positioned above the guidance device (125, 125b) of the second laser system (120), the guidance device (115, 115a, 115b) of the first laser system (110) may be positioned closer to the lens and the object carrier than the guidance device (125, 125b)of the second laser system (120) in a direction parallel to the axis formed by the shared beam path. In other words, the first guidance device (115, 115a, 115b) of the first laser beam may be positioned on an axis formed by the shared beam path of first laser beam and the second laser beam between the object carrier (132) and the second guidance device (125, 125b) of the second laser beam as shown in FIG. 1.

Accordingly, the term "below with respect to the first and second guidance device" defines a position which is more remote from the object carrier (132) in a direction of the axis formed by the shared beam path than the reference object.

The inventors of the present invention are of the opinion that a 20% or higher reflection for the first laser beam may be advantageous to maintain a deflected laser beam in the shared beam pass direction so as to allow microdissection of the biological object but also to not require an excessive increase of the intensity of the first laser beam prior to deflection by the guidance device (115, 115a) comprising the deflection mirror (115a) of the first laser system.

In a preferred embodiment the reflection of the deflection mirror (115a) for the first laser beam in this embodiment may be at least 40% or higher, more preferred 60% or higher and most preferred 80% or higher.

Moreover, it is preferred that the deflection mirror (115a) of the guidance device (115, 115a, 115b) of the first laser beam is attached to a mirror holder which may be movably mounted on a high precision rail.

Furthermore, it is preferred that the deflection mirror (115a) may be attached to a mirror holder which comprises a magnetic material to magnetically move and/or lock the deflection mirror in an end position in which the deflection mirror is positioned in the shared three-dimensional direction of the first laser beam and the second laser beam.

Furthermore, according to the present invention it may be advantageous when the material of the guidance device of the first laser system (110) comprising the deflection mirror (115a) is made of a material which does not change its configuration in a temperature range between -50 to +150 °C, preferably -25 to 100° and most preferably -10 to 75°C.

In a preferred embodiment the material of the guidance device may be aluminum, preferably hardened aluminum.

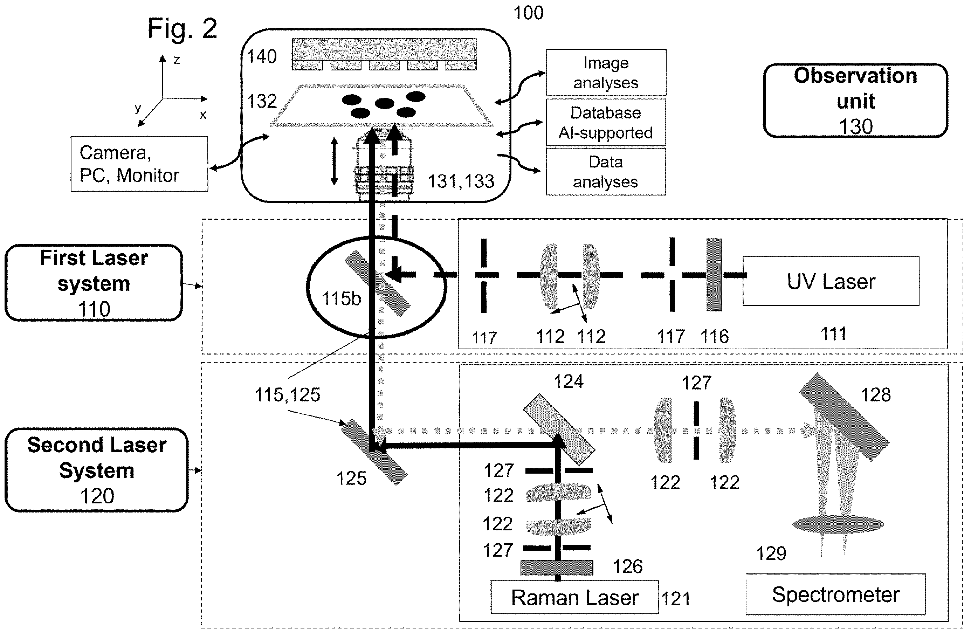

In an alternative second configuration of the apparatus (100) according to the present invention as shown in FIG. 2, the guidance device (115, 115a, 115b) of the first laser system (110) is positioned above the guidance device (125, 125b) of the second laser system, wherein the guidance device (115, 115a, 115b) of the first laser beam comprises a beam splitter (115b) comprising on its surface a coating having at least 90% or more transmission for the second laser wavelength as well as for the emitted and back-reflected Raman photons and at least a 20 % reflection for the first laser beam wavelength or a patterned coating comprising a small area of 1-10%, wherein the first laser wavelength is reflected.

Furthermore, according to the present invention it may be advantageous when the material of the guidance device (115, 115a, 115b) of the first laser system (110) comprising the deflection mirror (115a) is made of a material which does not change its configuration in a temperature range between -50 to +150 °C, preferably -25 to 100° and most preferably -10 to 75°C.

In a preferred embodiment the material of the holder of the deflection mirror (115a) may be aluminum, more preferably hardened aluminum.

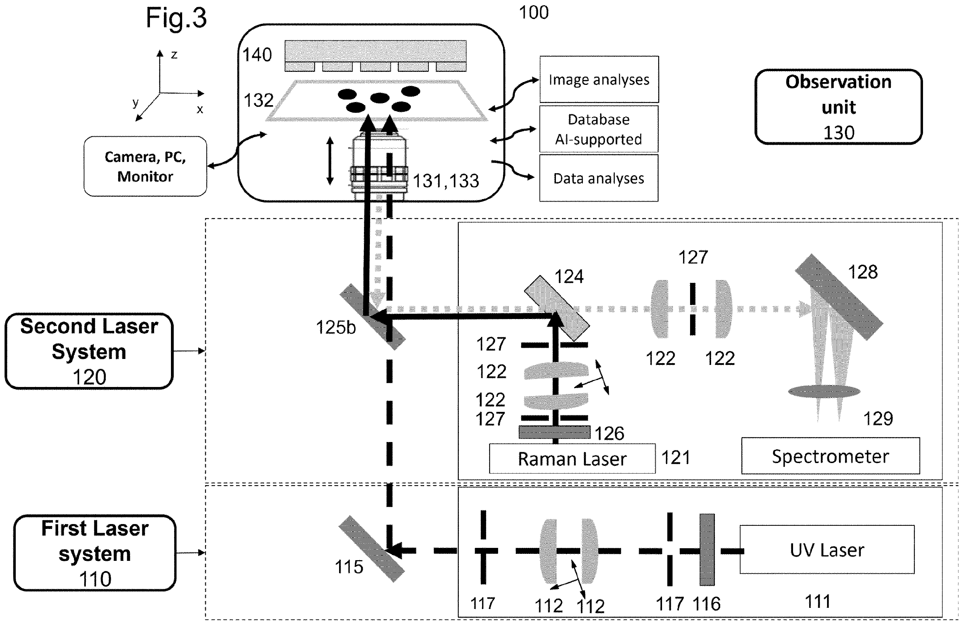

In a third alternative configuration of the apparatus (100) according to the present invention as shown in FIG. 3, the guidance device of the first laser system (110) is positioned below the guidance device of the second laser system, wherein said second laser system (120) comprises a guiding device comprising a beam splitter (125b) comprising a coating having at least 90% reflection of the second laser beam wavelength as well as for the emitted and back-reflected Raman photons and at least 20% transmission for the first laser beam.

In a preferred embodiment of the third configuration the beam splitter (125b) of the second laser system may comprise a coating having at least 90% reflection of the second laser beam wavelength as well as for the emitted and back-reflected Raman photons, more preferably at least 95 % reflection of the second laser beam wavelength as well as for the emitted and back-reflected Raman photons, even more preferably at least 98 % reflection of the second laser beam wavelength as well as for the emitted and back-reflected Raman photons.

In a preferred embodiment of the third configuration the beam splitter (125b) of the second laser system comprising a coating having at least 20% transmission for the first laser beam, preferably 40% or more transmission of the first laser beam, more preferably 60% or more transmission of the first laser beam and most preferably 80% or more transmission of the first laser beam.

In addition, the apparatus (100) according to the first to third embodiments preferably contains a camera, e.g., a CCD camera. In one embodiment the camera, e.g., a CCD camera is positioned below the first and second beam guidance device (115, 125) of the first and second laser system (110,120) thus intersecting the axis formed by the shared beam path of the first laser beam and the second laser beam.

### First laser system/LMC laser

The first laser system (110) according to the present invention usually generates a beam having a specific wavelength range capable to separate the specimen of interest from surrounding components, wherein the first laser beam after generation may pass through a beam attenuator (116), diaphragms (117) and its own diverging optic (112) as a first individual section of the first laser beam (B1A) and then is deflected by the first guidance device (115, 115a, 115b) of the first laser beam positioned in the shared beam path of the second and first laser beam (B1B) so as to reach the lens of the observation unit (130) and the object carrier (132). In a preferred embodiment the UV laser is a pulsed UV laser so that the energy supplied by the UV light can be precisely adjusted and controlled, to prevent damage to the cells or cell clusters being manipulated.

The beam attenuator (116) additionally serves to attenuate the light beam in the wavelength range (UV light) either in preset steps or continuously. The beam attenuator (116) can, thus, be an adjustable filter or a beam splitter. The attenuator (116) may be a continuously coated grey filter, wherein preferably said coated grey filter is configured to be arranged in orthogonal direction to avoid beam offset.

The (pulsed) UV laser which operates for example in the near UV, must be able to show a sufficient (diffraction-limited) focusing, that is, to have a minimal beam divergence.

For example, a nitrogen laser or a frequency-multiplied IR laser can be used as the UV laser. The beam of the first laser system (110) may be provided with its own diverging optic (112) which can be displaced in three dimensions, in particular three mutually orthogonal directions, as schematically shown in the Figures. These diverging optics (112) expand the beam passing through them to such an extent that the beam diameter just fills or slightly exceeds the back-facing aperture of the lens of the observation unit (130) after having passed or being deflected by the first guidance device (115, 115a, 115b). For example, these diverging optics (112) can comprise two planoconvex lenses or one planoconvex and one planoconcave lens having a suitable focal length.

Because the diverging optic (112) for the UV laser can be moved independently of the preceding optics, the processing can be optionally carried out in the focus/observation plane or outside the focus/observation plane. Thus, it may be possible to simultaneously observe and process one or more biological samples in a simple and reliable manner.

With respect to a spatial separation of for example cells or microbes from a biological sample, a UV-laser beam having a wavelength of 337 nm such as a pulsed N2 laser may be used. The laser delivers approximately 300 micro joules of radiation energy with a maximum pulse frequency of 20 Hz. Also suitable are other pulsed or continually operating lasers for example an Excimer laser having a wavelength of 193, 248 or 308 nm or a frequency quadrupled Nd;YAG-laser having a wavelength of 266 nm or a frequency doubled AR-ion laser having a wavelength of 244 nm or 257 nm. The laser beam is projected onto the sample in a dot shape via a dielectric beam splitter, reflected by the first guidance device (115, 115a, 115b) of the first laser beam and guided towards the lens of the observation unit (130) (magnification/reduction 63×, aperture NA=0.9 or also other objectives). Said dot may have a diameter of at least 1 µm. A circular or closed cutting line with a diameter of, for example, 1-2 µm is generated around these selected cells or microbes by a corresponding movement of the object carrier (132) in the horizontal x-y-plane. In one embodiment the area defined by the cutting line may be the object area. The laser beam remains stationary during the following cutting process described below.

Instead of a moveable table a stationary object table can be used and the laser beam can be caused to draw a circle around the selected cells or microbes by using a suitable optical deflection element disposed in the laser beam.

In one example the relative speed of movement of the laser beam to cut out a closed area may be between 0.5 and 20 µm per second, preferably 1 to 10 µm per second, more preferably 2 to 7 µm per second and most preferably 5 micrometres per second. A sharp edged narrow bounded cutting line can be generated and as the laser beam returns to the starting point of the cutting line a separation of the cut-out area occurs.

A prerequisite for the laser separation is that the sample (specimen) to be removed from the carrier is previously recognized and selected. A method that may be frequently used in pathological research is a method which uses staining, such as haematoxylin/eosin staining. In pharmacological research for the recognition and selection of particular cell structures fluorescent dyes - for example coupled to specific antibodies may be used. Raman spectroscopy as provided by the second laser system (120) which will be described below can also be used to identify cells, if no staining should be used. However, other commercial techniques such as fluorescence microscopy or Mass spectrometric Imaging can be used instead or additionally to Raman spectroscopy. While identification of a specific cell or cell cluster of interest within the biological sample by Raman spectroscopy will be explained in detail when describing the second laser system (120) the use of fluorescence microscopy presupposes that the fluorescently stained cells or microbes to be used for the intended selection generate a significant fluorescence signal that can be used as a differentiating criterion. With the help of a scanning program equipped with a search algorithm the object carrier can be controlled in such a way that automatically and in turn the areas with selected cells or cell clusters of interest can be positioned centrally in the field of view of the observation unit (130) and subsequently cut out.

### Raman laser

The second laser system (120) according to the present invention emitting a second laser beam having a second wavelength so as to identify the specimen according to the present invention may be "Raman spectroscopy". This term relates to a spectroscopic analysis which essentially relies on an observation of vibrational, rotational, and other low-frequency modes in a system. The technique is typically used to provide a structural fingerprint of molecules. It relies, in principle, on Raman scattering, i.e. inelastic scattering, of monochromatic light, from a laser in the visible, near or far-infrared, or near ultraviolet range. The laser light typically interacts with molecules of a cell. Most of the incident laser photons are reflected or absorbed. But some of the irradiated photons, typically 1 of 10¹⁰ photons, intercalate into a molecule causing molecular vibrations. When expelled from the molecule, said photons experience a change in energy resulting in an energy loss or (very rare) in a gain of energy. The wavelength of the ejected photon is, thus, shifted up to longer wavelength (towards red part) or down to shorter wavelength (towards blue part). The shift in energy gives information about the vibrational modes present in the system. Typically, a sample, e.g. a microbial cell, is illuminated with a laser beam. Electromagnetic radiation from the illuminated entity is collected with a lens and sent through a monochromator. Elastic scattered radiation at the wavelength corresponding to the laser light (i.e. Rayleigh scattering) may be filtered out, e.g. by a Raman notch filter (124), an edge pass filter, or a band pass filter, while the rest of the collected light is dispersed onto a (photon counting) detector preferably after passing through a grating (128).

In a preferred embodiment, a Raman spectroscopy system may be used which comprises a light source which usually will be a laser. The light source is typically configured to output an excitation beam. The excitation beam can for example have a wavelength in a range between 532 nm and 1064 nm, e.g. at approximately 785 nm. Subsequently, a Raman spectrometer (129) receives light scattered from the sample, e.g. a cell, by Stokes processes and/or Anti-Stokes processes. Furthermore, the approach may comprise use of a Raman spectrometer (129) comprising a diffractive element and an image sensor (photon counting camera) in order to record the Raman spectrum of the sample, e.g. of a selected cell or microbe. Suitable image analyses systems and/or tissue cytometers are known in the art.

The second laser beam after generation may pass through a beam attenuator (126) and its own diverging optic (122).

Furthermore, additional elements may be employed to perform the analysis, e.g. focusing optical elements, which can be designed as lenses (122), and/or diaphragms (127). In a preferred embodiment, Raman spectroscopy may enable an analysis of native cells. There is no need that the samples to be analyzed, e.g. tumor cells, stem cells, microbial cells or the like, have to be previously prepared, lysed, processed, dried or otherwise modified prior to Raman spectroscopic analysis in order to allow or facilitate an analysis thereof.

Rather, a Raman spectroscopy analysis can be based on entire cells in their native state, preferably in a liquid, e.g. aqueous environment. This approach allows for an extremely fast and artefact-free analysis, which is not possible if a set of sophisticated preparation steps has to be executed.

In a further preferred embodiment, the apparatus (100) according to the present invention may comprise an optical guidance configuration that enables generation of simultaneous holding forces. The optical guidance configuration is able to generate optical trapping forces so as to hold a specific cell or cell cluster therein, in order to record a Raman spectrum. The optical trapping forces can be produced by an excitation beam of the Raman spectroscopy system or a laser beam having an electromagnetic radiation different therefrom. The excitation beam can, thus, be used both as excitation for the Raman scattering and for producing optical trapping forces. Alternatively, the optical trapping forces can also be produced by a separate laser beam. In further preferred embodiments, the laser causing the optical trap may be split into several beams to simultaneously trap a multiple number of cells or microbes.

In a further embodiment, the laser inducing Raman excitation as well as simultaneously optical trapping may be split into several beams to simultaneously trap and analyze a multiple number of cells or microbes.

The analysis of biological samples by means of Raman spectroscopy advantageously allows to draw conclusions on the identity and properties of a biological sample as defined herein. In preferred embodiments, a determination by Raman spectroscopy comprises conducting a statistical evaluation of the at least one Raman spectrum, preferably of a plurality of Raman spectra, e.g. between 10 to 1000 spectra, by means of Raman spectroscopy of the isolated biological object. The plurality of spectra may either be obtained for a single biological cell or microbe, or for a group of biological cells or microbes, e.g. one spectrum may be obtained for one biological cell. It is particularly preferred to obtain spectra for single biological cells, e.g. by using optical traps as mentioned herein.

A statistical evaluation may, for example, be a principal component analysis (PCA) or a cluster analysis for each of the Raman spectra detected. Typically, in the "principal component analysis (PCA)", a coordinate transformation in the N-dimensional data space can be determined in such a way that the analysed entity of data points is spread along its most statistically relevant (e.g. variance-containing) coordinate axes in the transformed coordinate space. These coordinate axes define the principal components. The first principal component PC-1 typically defines the axis with the sharpest differences between the different groups of Raman spectra. A "cluster analysis" relates to a technique to group similar observations into several clusters based on the observed values of several variables for each individual. Cluster analysis maximizes the similarity of cases within each cluster while maximizing the dissimilarity between groups that are initially unknown.

Accordingly, by means of a statistical analysis such as the principal component analysis or a cluster analysis, as mentioned herein, it can be determined whether the pattern of Raman peaks contained in the Raman spectrum is characteristic of a specific microbe, biological cell or cell cluster. Alternatively, or additionally, it can be determined whether the pattern of Raman peaks contained in the Raman spectrum is characteristic of the presence of a specific microbe, biological cell or cell cluster as a "photonic fingerprint". A principal component analysis may hence be performed for a Raman spectrum or a plurality of Raman spectra which have been recorded from the sample, e.g. a biological cell or a group of biological cell clusters.

"Linear discriminant analysis (LDA)" or "normal discriminant analysis" or "discriminant function analysis" is a dimensionality reduction technique which is commonly used in the preprocessing step for pattern-classification and machine learning applications. The aim of this approach is to project a dataset onto a lower-dimensional space with good class-separability in order to avoid overfitting.

The term "spectral analysis" also refers to an evaluation of characteristic spectral patterns. As such, the determination of whether the Raman spectrum is characteristic of a specific biological cell or cell cluster may hence not be based on individual Raman peaks, but rather on a plurality of Raman intensities distributed evenly or unevenly over the Raman spectra at a plurality of Raman wavenumbers, yielding a characteristic spectral pattern. Thus, by means of a statistical method such as the principal component analysis, as mentioned above, or other statistical methods such as cluster analyses, one can take advantage of the fact that the Raman spectrum as a whole shows characteristics that are indicative and specific of a biological object of a particular type, e.g. a tumor cell or a microbe. The patterns in a Raman spectrum can be defined by one or a plurality of parameters selected from the group composed of the wavenumbers at which the Raman peaks are located, the peak heights, the flank steepness of the peaks, the distances between the peaks, and/or combinations of peaks in one or a plurality of Raman spectra. For evaluation of one or a plurality of Raman spectra detected, e.g. for one tumor cell or one microbe, one can determine whether these peak(s) are situated, according to a principal component analysis, in an area assigned to tumor cells or microbes, respectively, or in another area assigned to non-tumor cells or non-microbes respectively.

For example, by means of a statistical evaluation, each Raman spectrum can be assigned to a point in an N-dimensional data space, wherein N » 1, e.g. N > 100. The N-dimensional data space can be a data space spanned in a principal component analysis by the various principal components. Advantageously, one can determine from reference spectra, e.g. control experiments or previously recorded spectra, in which areas of the N-dimensional data space Raman spectra are arranged in clusters for a specific biological cell, e.g. tumor cells or microbes, and in which other areas of the N-dimensional data space Raman spectra are arranged in clusters for other specific biological objects e.g. non-tumor cells or non-microbes, respectively.

### Arrangement of the first and second laser system

As can be seen from Figures 1 to 3 in the apparatus (100) according to the present invention a first laser system (110) and a second laser system (120) are disposed. Furthermore, on a common mounting plate there can be disposed several rails with associated lifting devices for the corresponding optical components, so that the latter can be adjusted relative to the two lasers in such a way that the light beam each laser emits in its own wavelength range passes through the subsequent optical devices including the first and second guidance device (115, 115a, 115b, 125, 125b) of the respective laser beam to the object carrier (132). Here it is advantageous for the first and second laser beam to generate substantially parallel beams at least in the section wherein the first and the second laser beam have a shared laser beam path which is preferably in parallel with the light path of the observation unit (130) before passing the objective and reaching the object carrier (132). The optical components on their rails can usefully be of modular design.

The components situated in the beam path of the first laser beam and the second laser beam are of course designed and suitable for wavelengths of the first and the second laser beam and are correspondingly coated.

The apparatus (100) according to the present invention can comprise an actuator for the readjustment and/or movement of the object carrier.

The apparatus (100) according to the present invention can comprise an evaluation device. The evaluation device can be a computer or comprise a computer. The evaluation device can be coupled with the Raman spectroscopy system of the second laser system (120). The evaluation device can control the detection of the Raman spectrum by the Raman spectroscopy system of the second laser system (120). The evaluation device can control the Raman spectroscopy system of the second laser system (120) so that Raman spectra are detected in a spatially resolved manner at several places of the sample.

The evaluation device may have an interface to receive data from an image sensor of the Raman spectroscopy system. The evaluation device may have an integrated semiconductor circuit, which can comprise a processor or controller and which is configured to evaluate the acquired Raman spectrum in order to determine whether the Raman spectrum can be assigned to a specific result e.g. a cell type or microbe type by using the at least one Raman spectrum. The assignment of a specific Raman spectrum obtained to a specific result e.g. a cell type or a microbe type can be performed by a comparison of the at least one Raman spectrum measured by the second laser system (120) and Raman spectra obtained from various different uniform biological samples obtained in advance as reference data. In a preferred embodiment those Raman spectra obtained from various different uniform biological samples (reference data) are stored in a database which allows at least semi-automatic processing of the at least one Raman spectrum obtained from the current biological object and subsequent comparison with the spectra obtained from various different uniform biological samples stored in the database. Accordingly, the at least one Raman spectrum newly obtained from the biological sample on the object carrier can be compared with the various Raman spectra obtained in advance and e.g. stored in the database and, thus, allows an assignment of the Raman spectrum newly measured, to a stored Raman spectrum based on similarity of the respective Raman spectra. The reference data may include reference data sets for different types of tumors. Reference data stored in the database may include reference datasets associated with at least one of the following tumors: a breast tumor, a pancreatic tumor, a colon tumor, a lung tumor, a thyroid tumor, a stomach tumor, and/or an ovarian tumor. The reference data may include reference data sets associated with two or more of the following tumors: a breast tumor, a pancreatic tumor, a colon tumor, a lung tumor, a thyroid tumor, a stomach tumor, and/or an ovarian tumor.

The reference data may include reference data sets for cells, microbes, bacteria in their different development state. Thus, for example the status of a tumor cell or the differentiation state of a stem cell can be evaluated. The reference data may include reference data sets for cells, microbes, bacteria and those treated with drugs or antibiotics. Thus, for example antibiotic resistance can be immediately identified.

Reference data stored in the database may include reference datasets associated with at least one of the following microbes: viruses, bacteria, protozoa, eukaryotic single cell organisms such as protists or unicellular fungi.

Reference data stored in the database may further include different status of those microbes induced for example by starvation or exposition to poisons, drugs, radiation and more.

Depending on which sample is being examined, the integrated semiconductor circuit can retrieve and use the corresponding reference data set from the data base. The reference data set can in each case specify in which areas of a principal component space data points corresponding to a first type of a biological object e.g. tumor cells and data points corresponding to a second type of a biological object e.g. healthy issue cells are arranged. The reference data set may comprise information about reference Raman spectra collected for a first type of biological object e.g. tumor cell areas and a second type of biological object e.g. a stroma outside the tumor.

The Raman peaks evaluated by the integrated semiconductor circuit may be associated with molecular or genetic biomarkers e.g. by comparison of specific peaks of the Raman spectrum.

The apparatus (100) may be configured to optionally determine the spatial variation of Raman spectra. Some of the characteristics of a Raman spectrum may be more important at one specific part of the biological object, while others of the characteristics are more pronounced at a distance from the first part than in the immediate vicinity of said first part of the biological obj ect.

The integrated semiconductor circuit can process detected Raman spectra in different ways, for example, by using statistical methods, e.g. a principal component analysis. Other statistical methods, such as a hierarchical cluster analysis, can be used to assess whether a Raman spectrum in its entirety is attributable to a specific reference sample e.g. specific tumor cells, based on a specific Raman spectrum stored e.g. in the database. The determination of the similarity for attribution is not limited to the intensity of individual Raman peaks, but may, for example, also be performed for the distance of a data point in an N-dimensional data space by a principal component analysis of the area in the N-dimensional data space associated with a biological object corresponding to the reference Raman spectrum stored e.g. in the database. The corresponding processing can be carried out full-automatically by the integrated semiconductor circuit.

The integrated semiconductor circuit may be configured to perform a support vector machine (SVC) analysis. The support vector machine can be used to differentiate between different properties of the cells or cell clusters to be investigated e.g. between aggressive and non-aggressive tumors. The support vector machine may be applied to results of a principal component analysis of the at least one Raman spectrum to determine which property of the cell or cell cluster of interest is present e.g. if the tumor is aggressive or non-aggressive.

The evaluation device may be an optical and/or acoustic output unit which outputs information dependent on the analysis of the at least one Raman spectrum indicating whether an aggressive tumor is present. An assessment of the aggressiveness of the tumor can be issued. Thus, information about a stage of a carcinoma can be obtained.

Although the evaluation device and the Raman spectroscopy system are shown schematically as separate units in FIG. 1, the functions of the evaluation device can also be integrated in a housing of the Raman spectroscopy system. The Raman spectroscopy system and the evaluation device can be configured and used as mobile, in particular as portable units.

Moreover, the present invention pertains to a method for characterisation of a biological object by analyzing a specimen of interest in a sample, the method comprising the following steps:
a. investigating a sample with respect to a specimen of interest by using an observation unit (130) including a light source (131) and a spectrometric detection component;
b. optionally identifying the specimen of interest present in said solid sample by using Raman analysis by a second laser system (120) having a wavelength of between 450 nm to 1100 nm;
c. isolating said specimen with a first laser system (110) having a wavelength of between 250 nm to 450 nm;
d. transporting said specimen of interest to a collection device by using a single impulse of the first laser system (110) having a wavelength of between 250 nm to 450 nm; and
e. analyzing said specimen of interest on said collection device using Raman analysis by the second laser system (120) having a wavelength of between 450 nm to 1100 nm.

In one preferred embodiment of the method of analyzing a specimen of interest the specimen of interest is selected from the group of microbes, tumor cells, dysplastic cells, stem cells, forensic samples or plant cells. Especially, it is preferred that the specimen of interest is held within its native environment, especially in solution, or that the sample is held within the laser focus via optical trapping forces to carry out high-quality Raman measurements.

In addition, it is preferred in the present method that the specimen of interest in step e) is exposed to one or more antibiotics so as to determine antibiotic susceptibility of said specimen and/or to one or more cytostatics so as to determine efficacy of the cytostatic drug for said specimen.

In a further preferred embodiment of any of the method described before step b) comprises a step of subjecting the sample to a Raman analysis.

In a further preferred embodiment of any of the method described before step c) comprises statistical evaluation and judgment on the basis of artificial intelligence and/or machine learning algorithms for complex matrix data evaluation.

In a further preferred embodiment of the method described above, before step b) image analysis supported by machine learning (ML) and/or artificial intelligence (AI) may be performed to identify the specimen of interest prior to laser microdissection and/or Raman analysis. For example, tumor cells within a histological tissue section may be identified by ML/AI supported image analysis which was trained based on haematoxylin/eosin staining or based on previously present information on general shapes and/or sizes of the tumor cells.

In a particular preferred embodiment, the methods described in the preceding sections are carried out by an apparatus according to the first to third embodiment of the present invention.

### Refence signs

- 100: Apparatus
- 110: First laser system
- 111: (first) beam generating device
- 112: Diverging optic
- 115: Beam guiding device of first laser system
- 115a: Deflection mirror of beam guiding device of first laser system
- 115b: Beam splitter of beam guiding device of first laser system
- 116: Attenuator
- 117: Diaphragm
- 120: Second laser system
- 121: (second) beam generating device
- 122: Diverging optic
- 124: Raman notch filter
- 125: Beam guiding device of second laser system
- 125b: Beam splitter of beam guiding device of second laser system
- 126: Attenuator
- 127: Diaphragm
- 128: Grating
- 129: Raman spectrometer
- 130: Observation unit
- 131: Light source
- 132: Object carrier
- 133: Device for visual inspection
- 140: Collection device

## Claims

1. An apparatus (100) for analyzing a specimen of interest present in a sample, comprising:
an observation unit (130) comprising a light source (131), an object carrier (132), and at least one device for visual observation (133);
a first laser system (110) emitting a laser beam having a first wavelength so as to separate the specimen of interest from surrounding components;
a second laser system (120) emitting a second laser beam having a second wavelength so as to identify the specimen via Raman analysis;
wherein, the observation unit (130), the first laser system (110) and the second laser system (120) have the following configuration;
the first (110) and the second laser systems (120) each comprising at least a beam generating device (111,121), and a beam guidance device comprising one or more lenses (112,122), at least one beam splitter and/or deflection mirror, which are configured to be adjusted in all three orthogonal coordinates (x, y, z) in such a manner that the beam of the first laser system (110) and the beam of the second laser system (120), respectively, can be positioned and focused separately from each other,
wherein said first laser beam and said second laser beam share a common three-dimensional beam pass direction at least in a section (1B2, 2B2) before hitting the sample, wherein at least one beam guiding device (115, 125) of each of the first laser system (110) and the second laser system (120) are also aligned in said common three-dimensional direction of the first laser beam and the second laser beam.

2. The apparatus (100) according to claim 1, wherein the second laser beam is configured to simultaneously generate optical trapping forces so as to hold a sample of interest in the laser focus, preferably during Raman analysis.

3. The apparatus (100) according any of the preceding claims 1 or 2, wherein the wavelength of the first laser beam is in a range of between 250 and 450 nm and/or the wavelength of the second laser beam is in a range of between 450 nm and 1100 nm.

4. The apparatus (100) according to any one of the preceding claims, wherein the guidance device of the first laser system (115) is either positioned (1)
above the second laser system (120) which comprises
a. a deflection mirror (115a) having a 20% or more reflection for the first laser and is configured to be moved into the beam path shared by the first and second laser beam; or
b. a beam splitter (115b) comprising on its surface a coating having at least 90% or more transmission for the second laser wavelength as well as for the emitted and back-reflected Raman photons and at least 20 % reflection for the first laser wavelength or a patterned coating comprising a small area of 1-10% wherein the first laser wavelength is reflected;
or positioned (2)
below the second laser system (120) wherein said second laser system (120) comprising a beam splitter (125b) comprising a coating having at least 90% reflection of the second laser wavelength as well as for the emitted and back-reflected Raman photons and at least 20% transmission for the first laser.

5. The apparatus (100) according to claim 4, wherein the guidance device of the first laser system (115) is positioned as defined in item (1) and wherein the deflection mirror (115a) is attached to a mirror holder which may be movably mounted on a high precision rail.

6. The apparatus (100) according to any of the claims 4 or 5, wherein a guidance device of the first laser system (115) is positioned as defined in item (1) and wherein the deflection mirror (115a) is attached to a mirror holder which comprises a magnetic material to magnetically move and/or lock the deflection mirror (115a) in an end position in which the deflection mirror (115a) is positioned in the common three-dimensional direction of the first laser beam and the second laser beam.

7. The apparatus (100) according to any one of the preceding claims, wherein the apparatus (100) further comprises a collection device (140) located above or below the object carrier (132) to which a specimen of interest can be transported by use of the first laser system (110).

8. The apparatus (100) according to any one of the preceding claims, which further comprises a processing unit configured to defocus the beam focus of the first laser system (110) before the specimen of interest is transported to the collection device (140) and/or to refocus the beam focus to carry out cutting of the next specimen of interest.

9. The apparatus (100) according to any one of the preceding claims, wherein the first laser system (110) is a pulsed UV laser and the second laser system (120) is a continuous visible or NIR laser.

10. The apparatus (100) according to any one of the preceding claims, wherein the collection device (140) can be moved independently in all three orthogonal coordinates (x/y/z).

11. The apparatus (100) according to any one of the preceding claims, further comprising an image analysis system which is configured to identify the specimen of interest prior to laser microdissection and/or prior to Raman analyses in an automated manner by using machine learning and/or artificial intelligence (ML/AI).

12. Method of analyzing a specimen of interest in a sample, the method comprising the following steps:
a. investigating a sample with respect to a specimen of interest by using an observation unit (130) including a light source (131) and preferably in addition to the observation unit (130) a spectrometric detection component;
b. optionally identifying the specimen of interest present in said solid or liquid sample by using Raman analysis by a second laser system having a wavelength of between 450 nm to 1100 nm;
c. isolating said specimen by circum-cutting it with a first laser system (110) having a wavelength of between 250 nm to 450 nm;
d. transporting said specimen of interest to a collection device (140) by using at least a single impulse of the first laser system (110) having a wavelength of between 250 nm to 450 nm; and
e. optionally, analyzing said specimen of interest on said collection device (140) using Raman analysis by the second laser system (120) having a wavelength of between 450 nm to 1100 nm.

13. Method of analyzing a specimen of interest according to claim 12, wherein the specimen of interest is selected from the group of microbes, tumor cells, dysplastic cells, stem cells, tissue, forensic samples or plant cells.

14. Method of analyzing a specimen of interest according to claim 12 or 13, wherein the specimen of interest in step e) is exposed to one or more antibiotics so as to determine antibiotic susceptibility of said specimen and/or to one or more cytostatics so as to determine efficacy of the cytostatic drug for said specimen and/or any other reagent or poison affecting the specimen.

15. Method of analyzing a specimen of interest according to any one of claims 12 to 14, wherein step b) comprises a step of subjecting the sample to a Raman analysis.

16. Method of analyzing a specimen of interest according to any one of claims 12 to 15, wherein step c) comprises statistical evaluation and judgment on the basis of artificial intelligence and/or machine learning algorithms for complex matrix data evaluation.
